# EUROPEAN PATENT APPLICATION

(11) **EP 4 618 576 A1**
(43) Date of publication of application: **17.09.2025**
(21) Application number: 25158793.7
(22) Date of filing: 19.02.2025
(51) Int. Cl.: H04N 23/60, H04N 23/67

(54) **IMAGE-CAPTURING CONTROL APPARATUS, IMAGE-CAPTURING CONTROL METHOD, AND IMAGE-CAPTURING CONTROL PROGRAM**

(30) Priority: 13.03.2024 JP 2024038646
(71) Applicant: Yokogawa Electric Corporation, Tokyo 180-8750 (JP)
(72) Inventor: MURAKAMI, Masashi, Musashino-shi, Tokyo, 180-8750 (JP); SAKURAI, Yasuki, Musashino-shi, Tokyo, 180-8750 (JP); SUGAWARA, Hiroki, Musashino-shi, Tokyo, 180-8750 (JP); ARAI, Masahiro, Musashino-shi, Tokyo, 180-8750 (JP)
(74) Representative: Hoffmann Eitle

(57) **Abstract**

Provided is an image-capturing control apparatus comprising an image acquisition unit that acquires an image captured in a plant, an environment information acquisition unit that acquires environment information in the plant, an image determination unit that determines whether the image captured is clear, and an image-capturing instruction unit that instructs an image-capturing apparatus to recapture the image based on at least one of an unclear region in the image or the environment information when it is determined that the image is unclear. In the above-described image-capturing control apparatus, the image-capturing instruction unit may perform, on the image-capturing apparatus, an instruction of re-capturing, at least a part thereof being different in a case where it is determined that a subject region corresponding to a subject is unclear but regions other than the subject region are clear in the image and in a case where it is determined that an entirety of the image is unclear. Selected drawing: Fig. 1

## Description

### BACKGROUND

### 1. TECHNICAL FIELD

The present invention relates to an image-capturing control apparatus, an image-capturing control method, and an image-capturing control program.

### 2. RELATED ART

Patent document 1 describes that "the abnormality cause estimation system 1 includes an environment information acquisition means 2 that acquires information on the environment of the camera 6 and an information processing device 3 that performs operations related to estimation of abnormalities in the camera 6 using the information transmitted from the environment information acquisition means 2, the camera 6, the image processing unit 71, and the robot control unit 72 and the cause thereof (paragraph 0025).

### Prior Art Document

### Patent Document

Patent Document 1: Japanese Patent Application Publication No. 2018-113610

### SUMMARY

In a first aspect of the present invention, provided is an image-capturing control apparatus comprising an image acquisition unit that acquires an image captured in a plant, an environment information acquisition unit that acquires environment information in the plant, an image determination unit that determines whether the image captured is clear, and an image-capturing instruction unit that instructs an image-capturing apparatus to recapture the image based on at least one of an unclear region in the image or the environment information when it is determined that the image is unclear. The image determination unit may determine whether the captured image is clear based on comparison between the captured image and the past image of the same subject. The image determination unit may compare the captured image with a past image of the same subject and when a different region exists, may determine that the captured image is unclear and identify that region as an unclear region.

In the above-described image-capturing control apparatus, the image-capturing instruction unit may perform, on the image-capturing apparatus, an instruction of re-capturing, at least a part thereof being different in a case where it is determined that a subject region corresponding to a subject is unclear but regions other than the subject region are clear in the image and in a case where it is determined that an entirety of the image is unclear.

In any of the above-described image-capturing control apparatuses, when it is determined that the entirety of the image is unclear, the image-capturing instruction unit may perform, on the image-capturing apparatus, an instruction of re-capturing, at least a part thereof being different based on whether the environment information is within a normal range. The image-capturing instruction unit may perform instructions of re-capturing that differ in the presence or absence of a change in the image-capturing condition or the presence or absence of a standby time, based on whether the environment information is within a normal range.

In any of the above-described image-capturing control apparatuses, when it is determined that the entirety of the image is unclear and the environment information is in an abnormal range, the image-capturing instruction unit may instruct the image-capturing apparatus to perform re-capturing after a predetermined standby time has elapsed.

In any of the above-described image-capturing control apparatuses, when it is determined that the entirety of the image is unclear and the environment information is in a normal range, the image-capturing instruction unit may instruct the image-capturing apparatus to perform re-capturing before the standby time elapses or may not instruct the image-capturing apparatus to perform re-capturing.

In any of the above-described image-capturing control apparatuses, when it is determined that a subject region corresponding to a subject is unclear but regions other than the subject region are clear in the image, the image determination unit may detect presence or absence of halation in the subject region, and based on the halation being detected, the image-capturing instruction unit may instruct the image-capturing apparatus to recapture the image.

In any of the above-described image-capturing control apparatuses, when the halation is detected, the image-capturing instruction unit may instruct the image-capturing apparatus to change at least one of a position or an orientation of an image-capturing apparatus to recapture the image.

Any of the above-described image-capturing control apparatuses comprises an image-capturing condition determination unit that determines whether an image-capturing condition is suitable when at least a part of information from a subject could not be obtained by using the image, wherein the image-capturing instruction unit may instruct the image-capturing apparatus to change the image-capturing condition to recapture the image when it is determined that the image-capturing condition is unsuitable.

In any of the above-described image-capturing control apparatuses, the image acquisition unit may acquire the image in which a meter of an instrument in the plant is captured as a subject, and the image-capturing instruction unit may not instruct the image-capturing apparatus to perform re-capturing of the image when information indicated on the meter can be obtained from the image.

In a second aspect of the present invention, provided is an image-capturing control method comprising acquiring an image captured in a plant, acquiring environment information in the plant, determining whether the image captured is clear, and instructing an image-capturing apparatus to recapture the image based on at least one of an unclear region in the image or the environment information when it is determined that the image is unclear.

In a third aspect of the present invention, provided is an image-capturing control program that, when executed by a computer, causes the computer to function as an image acquisition unit that acquires an image captured in a plant, an environment information acquisition unit that acquires environment information in the plant, an image determination unit that determines whether the image captured is clear, and an image-capturing instruction unit that instructs an image-capturing apparatus to recapture the image based on at least one of an unclear region in the image or the environment information when it is determined that the image is unclear.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a configuration of an image-capturing control apparatus 10 according to the present embodiment together with an image-capturing apparatus 20, a sensor 30, and a database 40.
Fig. 2 illustrates a processing flow of the image-capturing control apparatus 10 according to the present embodiment.
Fig. 3 illustrates a processing flow of the image-capturing control apparatus 10 according to the present embodiment.
Fig. 4 illustrates a processing flow of the image-capturing control apparatus 10 according to the present embodiment.
Fig. 5 illustrates an example of image data 400 captured by the image-capturing apparatus 20 according to the present embodiment.
Fig. 6 illustrates an example of a computer 2200 in which a plurality of aspects of the present invention may be wholly or partly embodied.

### DESCRIPTION OF EXEMPLARY EMBODIMENTS

Hereinafter, embodiments of the present invention will be described. However, the following embodiments are not for limiting the invention according to the claims. In addition, not all of the combinations of features described in the embodiments are essential to the solution of the invention.

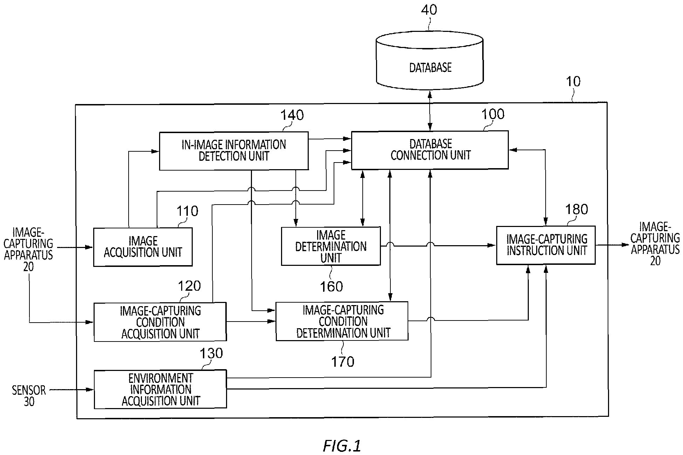

Fig. 1 illustrates a configuration of an image-capturing control apparatus 10 according to the present embodiment together with an image-capturing apparatus 20, a sensor 30, and a database 40. The image-capturing control apparatus 10 controls image-capturing such that abnormality in an image capturing a facility such as a plant can be determined, and a normal image can be acquired when an abnormality has occurred. Examples of plants in which the image-capturing control apparatus 10 is installed include industrial plants such as chemical or biological plants, as well as plants for managing and controlling well sites or surroundings thereof of gas fields, oil fields or the like, plants for managing and controlling power generation through hydroelectric power generation, thermal power generation, nuclear power generation or the like, plants for managing and controlling energy harvesting through solar power generation, wind power generation or the like, plants for managing and controlling water supply and sewerage, dams or the like. The image-capturing control apparatus 10 is communicatively connected to each of one or more image-capturing apparatuses 20 and each of one or more sensors 30. The image-capturing control apparatus 10 may be connected to each image-capturing apparatus 20 and each sensor 30 via a wireless network such as cellular phone network, wireless WAN, wireless LAN, or Bluetooth (registered trademark), or may be connected to each image-capturing apparatus 20 and each sensor 30 via a wired network such as a wired Ethernet (registered trademark).

The image-capturing control apparatus 10 may be a computer such as a personal computer (PC), a tablet-type computer, a smartphone, a work station, a server computer, or a general purpose computer, or may be a computer system in which a plurality of computers are connected. Such a computer system is also a computer in a broad sense. In addition, the image-capturing control apparatus 10 may be implemented by one or more virtual computer environments that can be executed in a computer. Alternatively, the image-capturing control apparatus 10 may be a dedicated computer designed for image-capturing control of each image-capturing apparatus 20, or may be dedicated hardware achieved by a dedicated circuit.

The image-capturing control apparatus 10 may be installed in a facility. Alternatively, the image-capturing control apparatus 10 may be provided outside the facility or in another facility through cloud computing system or the like on the Internet. The image-capturing control apparatus 10 comprises a database connection unit 100, an image acquisition unit 110, an image-capturing condition acquisition unit 120, an environment information acquisition unit 130, an in-image information detection unit 140, an image determination unit 160, an image-capturing condition determination unit 170, and an image-capturing instruction unit 180. The database connection unit 100 is connected to the database 40. The database connection unit 100 processes access from each unit in the image-capturing control apparatus 10 to the database 40.

The image acquisition unit 110 is connected to the database connection unit 100. The image acquisition unit 110 is connected to the image-capturing apparatus 20 via a network or the like. The image acquisition unit 110 acquires an image captured in the facility. The image acquisition unit 110 may acquire the image captured in the facility by receiving image data captured and transmitted by the image-capturing apparatus 20.

The image-capturing condition acquisition unit 120 is connected to the database connection unit 100. The image-capturing condition acquisition unit 120 is connected to the image-capturing apparatus 20 via a network or the like. The image-capturing condition acquisition unit 120 acquires an image-capturing condition of the image captured in the facility. The image-capturing condition acquisition unit 120 may acquire, as the image-capturing condition, at least one of an exposure value, an ISO value, a shutter speed, or a diaphragm value or the like. The image-capturing condition acquisition unit 120 may acquire the image-capturing condition of the image captured in the facility by receive image-capturing condition data transmitted by the image-capturing apparatus 20. When the image-capturing condition data is included in the image data transmitted by the image-capturing apparatus 20, the image acquisition unit 110 may function as the image-capturing condition acquisition unit 120.

The environment information acquisition unit 130 is connected to the database connection unit 100. The environment information acquisition unit 130 is connected to the sensor 30 via a network or the like. The environment information acquisition unit 130 acquires environment information in the facility. The environment information acquisition unit 130 may acquire, as the environment information in the facility, at least one of a temperature, humidity, or illuminance in the facility. The environment information acquisition unit 130 may acquire the environment information in the facility by receiving environment information measured and transmitted by the sensor 30.

The in-image information detection unit 140 is connected to the database connection unit 100 and the image acquisition unit 110. The in-image information detection unit 140 detects information included in the image acquired by the image acquisition unit 110.

The image determination unit 160 is connected to the database connection unit 100 and the in-image information detection unit 140. When in-image information detection unit 140 was unable to detect the information included in the image, the image determination unit 160 determines whether image is clear based on the image during normal operation stored in the database 40 to identify an unclear region in the image.

The image-capturing condition determination unit 170 is connected to the database connection unit 100, the image-capturing condition acquisition unit 120, and the in-image information detection unit 140. When the in-image information detection unit 140 was unable to detect the information included in the image, the image-capturing condition determination unit 170 determines whether the image-capturing condition received from the image-capturing condition acquisition unit 120 is suitable based on the image-capturing condition during normal operation stored in the database 40.

The image-capturing instruction unit 180 is connected to the database connection unit 100, the environment information acquisition unit 130, the image determination unit 160, and the image-capturing condition determination unit 170. The image-capturing instruction unit 180 is connected to the image-capturing apparatus 20 via a network or the like. The image-capturing instruction unit 180 may instruct the image-capturing apparatus 20 to perform re-capturing based on at least one of the environment information acquired by the environment information acquisition unit 130, a determination result of the image determination unit 160, or a determination result of the image-capturing condition determination unit 170. Here, "re-capturing" indicates capturing the same subject as the image acquired by the image acquisition unit 110. When it is determined that the image is unclear, the image-capturing instruction unit 180 may instruct the image-capturing apparatus 20 to perform re-capturing of the image based on at least one of the unclear region in the image or the environment information. The image-capturing instruction unit 180 may perform, on the image-capturing apparatus 20, an instruction of re-capturing, at least a part thereof being different in a case where it is determined that a subject region corresponding to a subject is unclear but regions other than the subject region are clear in the image and in a case where it is determined that an entirety of the image is unclear. Here, the subject region indicates a region occupied by the subject in the acquired image. When it is determined that an entirety of the image is unclear, the image-capturing instruction unit 180 may perform, on the image-capturing apparatus 20, an instruction of re-capturing, at least a part thereof being different based on whether the environment information is within a normal range. The image-capturing instruction unit 180 may perform instructions of re-capturing that differ in the presence or absence of a change in the image-capturing condition, presence or absence of a standby time or the like, based on whether the environment information is within a normal range.

One or more image-capturing apparatuses 20 is used to capture the inside of the facility. The image-capturing apparatus 20 may be a robot having an image-capturing function such as a camera, and may comprise an actuator or the like to move in the facility. The image-capturing apparatus 20 may patrol in the facility along a predetermined path. Alternatively, the image-capturing apparatus 20 may be fixed in the facility. In this case, the image-capturing apparatus 20 may be capable of changing the orientation of image-capturing.

One or more sensors 30 measure a state in the facility. The sensor 30 may measure at least one of a temperature, humidity, or illuminance. The sensor 30 may be included in the image-capturing apparatus 20. Alternatively, the sensor 30 may be fixed at the same location or different locations from each other in the facility.

The database 40 stores the captured image, the image-capturing condition, the environment information in the facility, and schedule information or the like of the image-capturing apparatus 20 and the sensor 30. The database 40 may be achieved by a storage region in at least a part of an external storage apparatus such as a hard disk drive connected to the image-capturing control apparatus 10, and may be achieved by a storage apparatus external to the image-capturing control apparatus 10, that is provided through cloud storage services or the like, for example.

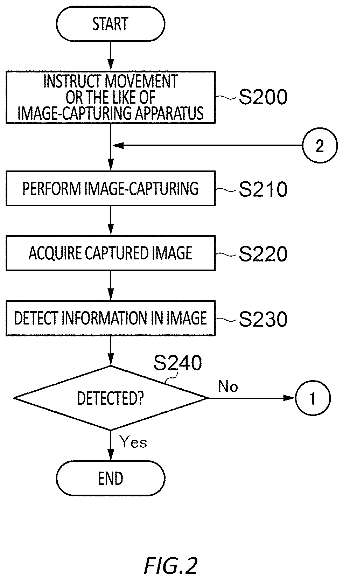

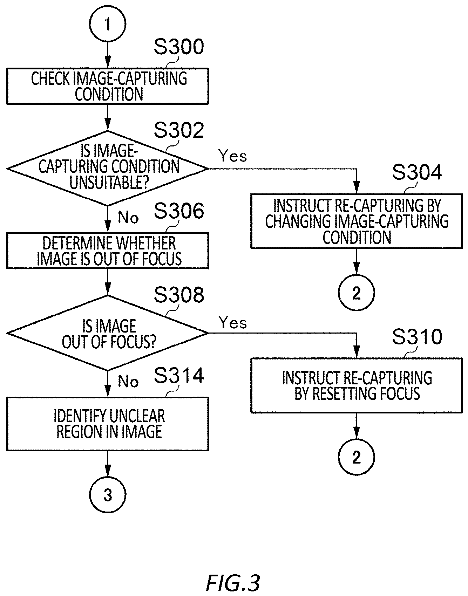

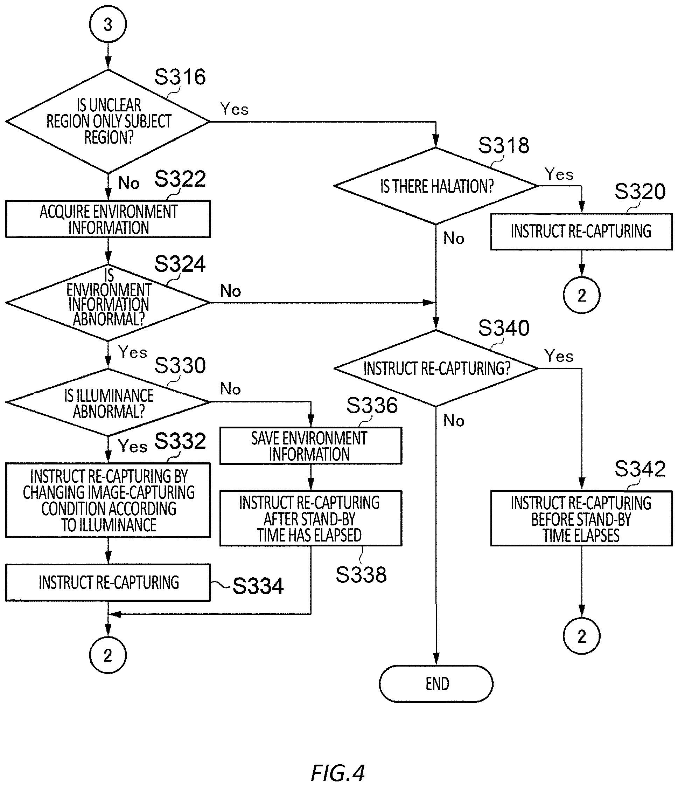

Fig. 2, Fig. 3, and Fig. 4 illustrate processing flows of the image-capturing control apparatus 10 according to the present embodiment. For the convenience of description, the processing flows in Fig. 2, Fig. 3, and Fig. 4 illustrate a case in which the image-capturing control apparatus 10 controls image-capturing by one image-capturing apparatus 20. The image-capturing control apparatus 10 may perform the processing flows in Fig. 2, Fig. 3, and Fig. 4 on each of a plurality of image-capturing apparatuses 20.

At step 200 (S200), the image-capturing control apparatus 10 instructs the image-capturing apparatus 20 to move and to perform image-capturing. Here, the image-capturing control apparatus 10 may refer to the schedule information recorded in the database 40 in association with the image-capturing apparatus 20 to be processed to acquire the patrolling schedule in the facility of the image-capturing apparatus 20 to be processed. This schedule may include information required to decide an operation of the image-capturing apparatus 20, such as a position of each image-capturing location at which the image-capturing apparatus 20 is to perform image-capturing in the facility, a time at which each image-capturing location should be reached, a moving path between image-capturing locations, or an image-capturing direction at each image-capturing location. The image-capturing control apparatus 10 moves the image-capturing apparatus 20 to the next image-capturing location according to designation by this schedule, and supplies, to the image-capturing apparatus 20, an instruction to perform image-capturing at the next image-capturing location. In response, the image-capturing apparatus 20 moves to the next image-capturing location. When the image-capturing apparatus 20 is fixed in the facility, the image-capturing control apparatus 10 may instruct the image-capturing apparatus 20 only to perform image-capturing.

At S210, the image-capturing apparatus 20 captures the inside of the facility and generates image data. The image-capturing apparatus 20 may capture a meter of an instrument in the plant as the subject. The image-capturing apparatus 20 transmits the captured image data to the image-capturing control apparatus 10.

At S220, the image acquisition unit 110 acquires an image capturing inside of the facility from the image-capturing apparatus 20. The image acquisition unit 110 may acquire the image capturing the meter of the instrument in the plant as the subject. The image acquisition unit 110 may acquire an image capturing equipment or the instrument in the plant as the subject, or may acquire an image capturing a surrounding of the equipment or the instrument in the plant as the subject. The image-capturing condition acquisition unit 120 may acquire the image-capturing condition from the image-capturing apparatus 20. The environment information acquisition unit 130 may acquire the environment information in the facility from the sensor 30. The image acquisition unit 110, the image-capturing condition acquisition unit 120, and the environment information acquisition unit 130 may record the acquired information or the like in the database 40.

At S230, the in-image information detection unit 140 detects information in the image acquired by the image acquisition unit 110. When the subject is a meter, the in-image information detection unit 140 may detect the information indicated on the meter. When the meter is one that displays numeric values or a letter, the in-image information detection unit 140 may detect letter information such as the numeric value, the letter or the like indicated on the meter through character recognition. When the meter is one that indicates a value from a position of a needle, an interface or the like relative to the scale, that is, an analog meter, the in-image information detection unit 140 may detect a numeric value indicated by the needle or the interface from the positional relationship between the needle or the interface and the scale. When the meter is one that indicates information through a change of hue, for example, one that presents a dark red color as the pressure becomes higher, for example, the in-image information detection unit 140 may detect information indicated on the meter by converting the change of hue into a numeric value. When the subject is equipment, an instrument, or the surrounding thereof in the plant, the in-image information detection unit 140 may detect the position, the outline or the like of the equipment or the instrument in the image.

When the in-image information detection unit 140 was able to detect information in the image (Yes at S250), the in-image information detection unit 140 may record the detected information in the database 40. The image-capturing control apparatus 10 ends the processing flow. Therefore, in a case where the subject is a meter, the image-capturing instruction unit 180 may not instruct the image-capturing apparatus to perform re-capturing of the image when the information indicated on the meter was obtained from the image.

When the in-image information detection unit 140 was unable to detect at least a part of the information in the image (No at S250), the image-capturing control apparatus 10 advances the processing to S300. For example, when the in-image information detection unit 140 was unable to detect information indicated on at least a part of the meter, which is the subject, or when the in-image information detection unit 140 was unable to detect at least a part of the outline of the subject, the image-capturing control apparatus 10 advances the processing to S300. At S300, when unable to obtain at least a part of the information from the subject by using the image, the image-capturing condition determination unit 170 determines whether the image-capturing condition is suitable. When the in-image information detection unit 140 was unable to obtain at least a part of the information from the subject by using the image, the image-capturing condition determination unit 170 may instruct the image-capturing condition acquisition unit 120 to acquire an image-capturing condition, or may read, from the database 40, the image-capturing condition previously acquired at S220 by the image-capturing condition acquisition unit 120. The image-capturing condition determination unit 170 may determine whether the image-capturing condition is suitable based on a comparison between the image-capturing condition acquired by the image-capturing condition acquisition unit 120 (including the image-capturing condition previously acquired at S220 by the image-capturing condition acquisition unit 120 and stored in the database 40) and the image-capturing condition stored in the database 40. As the image-capturing condition stored in the database 40, the image-capturing condition determination unit 170 may use a predetermined reference image-capturing condition for the same subject, or may use a condition at the time a past image capturing the same subject for which the in-image information detection unit 140 was able to detect information was captured. The image-capturing condition determination unit 170 may compare the acquired value with the value stored in the database 40 for each parameter of an exposure value, an ISO value, a shutter speed, and a diaphragm value, and determine that the image-capturing condition is unsuitable when the difference in the numeric values for at least one parameter exceeds a predetermined threshold.

When the image-capturing condition is unsuitable (Yes at S302), the image-capturing control apparatus 10 advances the processing to S304. At S304, when it is determined that the image-capturing condition is unsuitable, the image-capturing instruction unit 180 instructs the image-capturing apparatus 20 to change the image-capturing condition and recapture the image. The image-capturing instruction unit 180 may instruct the image-capturing apparatus 20 to change the image-capturing condition to the predetermined reference image-capturing condition for the same subject that is stored in the database 40 or to a condition at the time when a past image capturing the same subject that is stored in the database 40, for which the in-image information detection unit 140 was able to detect the information was captured. At S210, after returning from S304, the image-capturing apparatus 20 performs re-capturing based on an image-capturing condition after the change. In this manner, the image-capturing control apparatus 10 can acquire an image for which the in-image information detection unit 140 can detect information.

When the image-capturing condition is suitable (No at S302), the image-capturing control apparatus 10 advances the processing to S306. At S306, the image-capturing instruction unit 180 determines whether the captured image is out of focus. The image-capturing instruction unit 180 may determine whether the captured image is out of focus based on edge detection. The image-capturing instruction unit 180 may perform edge detection in the surrounding of the subject in the captured image, and determine that the captured image is out of focus when a score or the like indicating the change amount of luminance value, edge amount in the detected range is below a predetermined threshold. Here, the image-capturing instruction unit 180 may identify, as the subject in the captured image, an object captured in a region including a position at which focusing is provided in the captured image. When data related to an image or a shape of the subject is previously stored in the database 40, the image-capturing instruction unit 180 may identify, as the subject in the captured image, an object of which a matching degree with the image or the shape of the subject stored in the database 40 is equal to or greater than a threshold.

When the captured image is out of focus (Yes at S308), the image-capturing control apparatus 10 advances the processing to S310. At S310, the image-capturing instruction unit 180 instructs the image-capturing apparatus 20 to reset the focus and recapture the image. The image-capturing instruction unit 180 may instruct the image-capturing apparatus 20 perform recapturing by moving to an image-capturing location where objects other than the subject are not positioned at a pixel position where focusing is to be provided in the image, such that the subject will be focused. When an auto-focus function of the image-capturing apparatus 20 is off, the image-capturing instruction unit 180 may instruct the image-capturing apparatus 20 to perform re-capturing by turning the auto-focus function on. In these manners, the image-capturing control apparatus 10 can prevent the recaptured image from being out of focus. At S210, after returning from S310, the image-capturing apparatus 20 performs re-capturing.

When the captured image is not out of focus (No at S308), the image-capturing control apparatus 10 advances the processing to S314. At 314, the image determination unit 160 determines whether the captured image is clear. The image determination unit 160 may determine whether the captured image is clear based on comparison between the captured image and the past image of the same subject stored in the database 40. Here, the image determination unit 160 may use, as the past image of the same subject, an image for which the in-image information detection unit 140 was able to detect information. The image determination unit 160 may compare the captured image with the past image of the same subject and when a different region exists, may determine that the captured image is unclear and identify that region as an unclear region.

When the unclear region identified by the image determination unit 160 is only the subject region (Yes at S316), the image-capturing control apparatus 10 advances the processing to S318. At S318, when it is determined that the subject region corresponding to the subject in the image is unclear but regions other than the subject region are clear, the image determination unit 160 detects presence or absence of halation in the subject region. Here, halation may indicate the image being blurred in white due to intense light. Halation tends to occur when reflection rate of light is high at a subject surface such as when the meter is covered by a cover made of glass or the like. When the area of regions in which the brightness exceeds a predetermined threshold exceeds a certain value in the subject region of the captured image, the image determination unit 160 may determine that halation exists in the captured image.

When halation exists in the captured image (Yes at S318), the image-capturing control apparatus 10 advances the processing to S320. At S320, when halation is detected, the image-capturing instruction unit 180 instructs the image-capturing apparatus 20 to recapture the image. When halation is detected, the image-capturing instruction unit 180 may instruct the image-capturing apparatus 20 to change at least one of the position or orientation of the image-capturing apparatus 20 to recapture the image. The image-capturing instruction unit 180 may instruct the image-capturing apparatus 20 to recapture the image after performing at least one of moving to a different image-capturing location or changing the orientation of the camera. The image-capturing instruction unit 180 may instruct the image-capturing apparatus 20 to change at least one of the position or orientation of the image-capturing apparatus 20 such that the light that caused the halation will not be included in the image. In this manner, the image-capturing control apparatus 10 can prevent halation from occurring in the recaptured image. At S210, after returning from S320, the image-capturing apparatus 20 performs re-capturing.

When the unclear region identified by the image determination unit 160 is not only the subject region but the entire image (No at S316), the image-capturing control apparatus 10 advances the processing to S322. At S322, the environment information acquisition unit 130 acquires environment information in the facility from the sensor 30. Alternatively, the environment information acquisition unit 130 may have previously acquired the environment information at S220 or the like. The environment information acquisition unit 130 may acquire the environment information from the sensor 30, among one or more sensors 30 that exist in the facility, having the shortest linear distance with the image-capturing location at which the image-capturing apparatus 20 performed image-capturing or the subject. When the image-capturing apparatus 20 comprises the sensor 30, the environment information acquisition unit 130 may acquire the environment information from the sensor 30 provided n the image-capturing apparatus 20 that performed the image-capturing. The environment information acquisition unit 130 may acquire the environment information from the sensor 30, among the one or more sensors 30 that exist in the facility, that exist in the same room as the image-capturing location at which the image-capturing apparatus 20 performed the image-capturing. The environment information acquisition unit 130 may record the acquired environment information in the database 40.

The image-capturing instruction unit 180 determines whether the environment information acquired by the environment information acquisition unit 130 is within a normal range. By comparing the environment information acquired by the environment information acquisition unit 130 and the environment information stored in the database 40, the image-capturing instruction unit 180 may determine whether the environment information acquired by the environment information acquisition unit 130 is within a normal range. As the environment information stored in the database 40, the image-capturing instruction unit 180 may use a predetermined reference environment information for the same subject, or may use the environment information at the time a past image capturing the same subject for which the in-image information detection unit 140 was able to detect information was captured. When the sensor 30 is provided in the image-capturing apparatus 20, the image-capturing instruction unit 180 may use, as the environment information stored in the database 40, past environment information acquired by the sensor 30 provided in the image-capturing apparatus 20 that performed the image-capturing. The image-capturing instruction unit 180 may use, as the environment information stored in the database 40, environment information, acquired from a sensor 30 exists near a position where the image-capturing apparatus 20 that performed the image-capturing existed before the image-capturing, of the past existing position. For each parameter of the temperature, humidity, and illuminance in the facility, the image-capturing instruction unit 180 may compare the value acquired by the environment information acquisition unit 130 and a value stored in the database 40, and when the difference between the numeric values exceeds a predetermine threshold for at least one parameter, may determine that that parameter is abnormal and that the environment information is in an abnormal range.

When the temperature or humidity in the facility acquired by the environment information acquisition unit 130 is higher than the temperature or humidity at a past existing position of the image-capturing apparatus 20 and the difference between such temperature or humidity is greater than a threshold, a camera lens of the image-capturing apparatus 20 may become foggy, causing the entire image captured by the image-capturing apparatus 20 to be unclear. When the humidity in the facility acquired by the environment information acquisition unit 130 is greater than a past humidity at the same point or the like or the reference humidity and the difference between such values is greater than the threshold, a fog, haze or the like may be generated in the facility, causing the entire image captured by the image-capturing apparatus 20 to be unclear. In a case where the difference between the illuminance in the facility acquired by the environment information acquisition unit 130 and a past illuminance at the same point or the like or the reference value exceeds the threshold, the entire image captured by the image-capturing apparatus 20 may become unclear when a suitable image-capturing condition is used for the past illuminance or the reference value. For each parameter of the temperature, the humidity, and the illuminance in the facility, the image-capturing instruction unit 180 may compare value acquired by the environment information acquisition unit 130 with the value stored in the database 40, and when there is no parameter for which the difference between the numeric values exceeds a predetermined threshold, may determine that the environment information is within the normal range.

When the environment information is in an abnormal range (Yes at S324), the image-capturing control apparatus 10 advances the processing to S330. When the illuminance in the environment information is abnormal (Yes at S330), the image-capturing control apparatus 10 advances the processing to S332. At S332, the image-capturing instruction unit 180 instructs the image-capturing apparatus 20 to recapture the image by changing the image-capturing condition according to the illuminance. When the illuminance is low compared to the reference value or the past illuminance, the image-capturing instruction unit 180 may instruct the image-capturing apparatus 20 to perform at least one of re-capturing by increasing the ISO sensitivity, re-capturing by reducing the shutter speed, or re-capturing by reducing the diaphragm value. At S210, after returning from S332, the image-capturing apparatus 20 performs re-capturing based on the image-capturing condition after the change. In this manner, the image-capturing control apparatus 10 can acquire a clearer image.

When a parameter other than the illuminance in the environment information is abnormal (No at S330), the image-capturing control apparatus 10 advances the processing to S336. At S336, the image-capturing instruction unit 180 stores the environment information acquired by the environment information acquisition unit 130 in the database 40 an abnormal value.

At S338, when it is determined that the entire image is unclear and the environment information is in an abnormal range, the image-capturing instruction unit 180 instructs the image-capturing apparatus 20 to perform re-capturing after a predetermined standby time has elapsed. The image-capturing instruction unit 180 may instruct the image-capturing apparatus 20 to perform the re-capturing after waiting without moving until the predetermined time elapses. The image-capturing instruction unit 180 may acquire information related to the predetermined standby time from the database 40. At S210, after returning from S338, the image-capturing apparatus 20 performs re-capturing based on the image-capturing condition after the change. In this manner, when the fogging of the camera lens due to a rapid change in the temperature or humidity was the cause of the entire image being unclear, the image-capturing control apparatus 10 can acquire a clear image captured after the standby time has elapsed with fogging of the camera lens being eliminated. In addition, when a fog, mist or the like due to a rapid rise in the humidity at the image-capturing location was the cause of the entire image being unclear, the image-capturing control apparatus 10 can acquire a clear image captured after the standby time has elapsed with the fog, mist or the like eliminated.

When no halation exists in the captured image (No at S318) and when the environment information is in the normal range (No at S324), the image-capturing control apparatus 10 advances the processing to S340. When it is determined that the entire image is unclear and the environment information is in the normal range, the image-capturing instruction unit 180 instructs the image-capturing apparatus 20 to perform re-capturing before the standby time elapses, or does not instruct the image-capturing apparatus to perform re-capturing. When the image-capturing instruction unit 180 instructs re-capturing (Yes at S340), the image-capturing control apparatus 10 advances the processing to S342. At S342, the image-capturing instruction unit 180 instructs the image-capturing apparatus 20 to perform re-capturing before the standby time elapses. At S210, after returning from S342, the image-capturing apparatus 20 performs the re-capturing. When the image-capturing instruction unit 180 does not instruct the image-capturing apparatus to perform re-capturing (No at S340), the image-capturing instruction unit 180 may instruct the image-capturing apparatus 20 to move to a predetermined home position. When it is determined that the entire image is unclear, the environment information is in the normal range, and the image-capturing condition is suitable, since an abnormality may have occurred in the image-capturing apparatus 20, the image-capturing apparatus 20 can be diagnosed by an administrator or the like more easily by moving to the home position. The image-capturing instruction unit 180 may notify the administrator of the facility or the like that the abnormality has occurred. The image-capturing control apparatus 10 ends the processing flow.

According to the image-capturing control apparatus 10 illustrated above, when the in-image information detection unit 140 is unable to detect information in the captured image, since the cause thereof can be identified and eliminated and the image-capturing apparatus 20 can be instructed to perform re-capturing, the image for which information can b detected can be recaptured automatically, and the work load of an operator can be reduced.

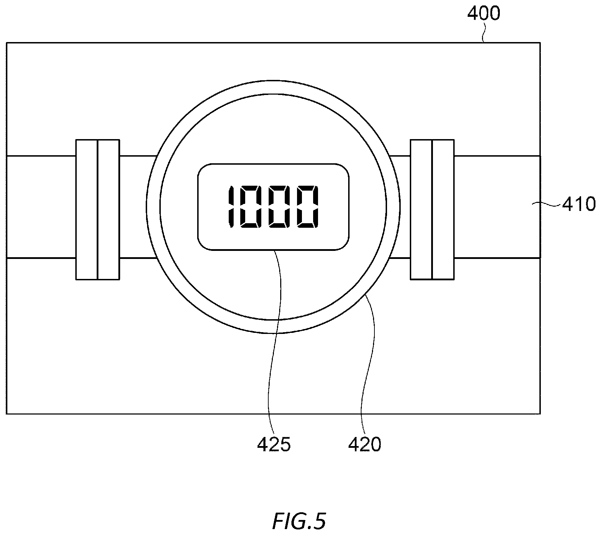

Fig. 5 illustrates an example of image data 400 captured by the image-capturing apparatus 20 according to the present embodiment. The image-capturing apparatus 20 transmits the image data 400 to the image-capturing control apparatus 10 (S220 in Fig. 2). The image data 400 captures the tube 410 and the meter 420. The meter 420 includes a numeric value display area 425. In the example of the present figure, a numeric value "1000" is displayed in the numeric value display area 425. When the in-image information detection unit 140 detects the numeric value displayed on the meter, the numeric value display area 425 becomes the subject region in the image data 400.

Various embodiments of the present invention may be described with reference to flowcharts and block diagrams whose blocks may represent (1) steps of processes in which operations are performed or (2) sections of apparatuses responsible for performing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instructions may be provided for a processor or programmable circuit of a general purpose computer, special purpose computer, or other programmable data processing apparatuses such as a computer locally or via a wide area network (WAN) such as a local area network (LAN), the Internet, or the like, and execute the computer-readable instructions in order to create means for executing the operations designated in flowcharts or block diagrams. Examples of the processor include a computer processor, a processing unit, a microprocessor, a digital signal processor, a controller, a microcontroller, and the like.

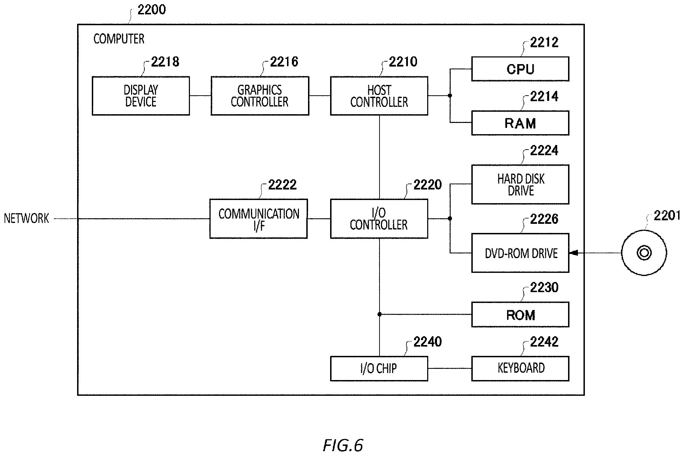

Fig. 6 illustrates an example of a computer 2200 in which a plurality of aspects of the present invention may be wholly or partly embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer-readable medium such as the DVD-ROM 2201 or the IC card. The programs are read from the computer-readable medium, are installed in the hard disk drive 2224, the RAM 2214, or the ROM 2230 which is also an example of the computer-readable medium, and are executed by the CPU 2212. The information processing described in these programs is read by the computer 2200, and provides cooperation between the programs and the various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on processing described in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from description of the claims that the embodiments to which such modifications or improvements are made may be included in the technical scope of the present invention.

It should be noted that each process of the operations, procedures, steps, stages, and the like performed by the apparatus, system, program, and method shown in the claims, specification, or drawings can be executed in any order as long as the order is not indicated by "prior to", "before", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

10: image-capturing control apparatus;
20: image-capturing apparatus;
30: sensor;
40: database;
100: database connection unit;
110: image acquisition unit;
120: image-capturing condition acquisition unit;
130: environment information acquisition unit;
140: in-image information detection unit;
160: image determination unit;
170: image-capturing condition determination unit;
180: image-capturing instruction unit;
400: image data;
410: tube;
420: meter;
425: numeric value display area;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. An image-capturing control apparatus comprising:
an image acquisition unit that acquires an image captured in a plant;
an environment information acquisition unit that acquires environment information in the plant;
an image determination unit that determines whether the image captured is clear; and
an image-capturing instruction unit that instructs an image-capturing apparatus to recapture the image based on at least one of an unclear region in the image or the environment information when it is determined that the image is unclear.

2. The image-capturing control apparatus according to claim 1, wherein the image-capturing instruction unit performs, on the image-capturing apparatus, an instruction of re-capturing, at least a part thereof being different in a case where it is determined that a subject region corresponding to a subject is unclear but regions other than the subject region are clear in the image and in a case where it is determined that an entirety of the image is unclear.

3. The image-capturing control apparatus according to claim 2, wherein when it is determined that the entirety of the image is unclear, the image-capturing instruction unit performs, on the image-capturing apparatus, an instruction of re-capturing, at least a part thereof being different based on whether the environment information is within a normal range.

4. The image-capturing control apparatus according to claim 3, wherein when it is determined that the entirety of the image is unclear and the environment information is in an abnormal range, the image-capturing instruction unit instructs the image-capturing apparatus to perform re-capturing after a predetermined standby time has elapsed.

5. The image-capturing control apparatus according to claim 4, wherein when it is determined that the entirety of the image is unclear and the environment information is in a normal range, the image-capturing instruction unit instructs the image-capturing apparatus to perform re-capturing before the standby time elapses or does not instruct the image-capturing apparatus to perform re-capturing.

6. The image-capturing control apparatus according to any one of claims 2 to 5, wherein
when it is determined that a subject region corresponding to a subject is unclear but regions other than the subject region are clear in the image, the image determination unit detects presence or absence of halation in the subject region, and
when the halation is detected, the image-capturing instruction unit instructs the image-capturing apparatus to recapture the image.

7. The image-capturing control apparatus according to claim 6, wherein when the halation is detected, the image-capturing instruction unit instructs the image-capturing apparatus to change at least one of a position or an orientation of an image-capturing apparatus to recapture the image.

8. The image-capturing control apparatus according to any one of claims 1 to 7, comprising:
an image-capturing condition determination unit that determines whether an image-capturing condition is suitable when at least a part of information from a subject could not be obtained by using the image,
wherein the image-capturing instruction unit instructs the image-capturing apparatus to change the image-capturing condition to recapture the image when it is determined that the image-capturing condition is unsuitable.

9. The image-capturing control apparatus according to any one of claims 1 to 7, wherein
the image acquisition unit acquires the image in which a meter of an instrument in the plant is captured as a subject, and
the image-capturing instruction unit does not instruct the image-capturing apparatus to perform re-capturing of the image when information indicated on the meter can be obtained from the image.

10. An image-capturing control method comprising:
acquiring an image captured in a plant;
acquiring environment information in the plant;
determining whether the image captured is clear; and
instructing an image-capturing apparatus to recapture the image based on at least one of an unclear region in the image or the environment information when it is determined that the image is unclear.

11. An image-capturing control program that, when executed by a computer, causes the computer to function as:
an image acquisition unit that acquires an image captured in a plant;
an environment information acquisition unit that acquires environment information in the plant;
an image determination unit that determines whether the image captured is clear; and
an image-capturing instruction unit that instructs an image-capturing apparatus to recapture the image based on at least one of an unclear region in the image or the environment information when it is determined that the image is unclear.
